Europäisches Patentamt

European Patent Office

Office européen des brevets

(11) Publication number: **0 019 778**
**B1**

# EUROPEAN PATENT SPECIFICATION

(45) Date of publication of patent specification: 04.05.83

(21) Application number: 80102562.8

(22) Date of filing: 09.05.80

(51) Int. Cl.³: **G 06 K 7/10, H 01 S 3/00, G 02 B 5/00**

(54) Focussed laser beam optical system.

(30) Priority: 29.05.79 US 43185

(43) Date of publication of application:
10.12.80 Bulletin 80/25

(45) Publication of the grant of the patent:
04.05.83 Bulletin 83/18

(84) Designated Contracting States:
DE FR GB IT

(56) References cited:
FR - A - 2 040 507
US - A - 3 750 189
US - A - 3 787 107
US - A - 3 980 397

REVIEW OF SCIENTIFIC INSTRUMENTS, vol. 45, nr. 11, November 1974 NEW YORK (US) B. J. PERNICK: "Irradiance uniformity and power loss with a spatially filtered laser beam", pages 1344 to 1346.

(73) Proprietor: International Business Machines Corporation
Armonk, N.Y. 10504 (US)

(72) Inventor: Rabedeau, Melbroune Edward
18631 Harleigh Drive
Saratoga, California 95070 (US)

(74) Representative: Lewis, Alan John
IBM United Kingdom Patent Operations Hursley Park
Winchester, Hants, S021 2JN (GB)

Courier Press, Leamington Spa, England.

Focussed laser beam optical system

The invention relates to optical systems for focussing laser beams on a given target.

Focussed laser beams are used extensively. One important application is that of the point-of-sale recording system wherein coded labels are scanned with a focussed laser beam. A problem is experienced in this application in that a reasonably sized focussed spot is required while there is always considerable uncertainty as to the distance between the focussing lens and the surface over which scanning takes place. Another important application is found in a high-speed, high-resolution laser printing system where a similar problem arises.

Past attempts to provide focussed laser beams have resorted to refinements of old optical systems that are expensive, bulky and difficult in manufacture and/or adjustment in the field. Typical systems of the prior art are described in U.S. specifications Nos. 3,750,189 and 3,980,397.

U.S. specification No. 3,750,189 (Fleischer) described an optical light scanning device in which a light beam from a laser source is focussed in one dimension by a cylindrical lens onto a rotating polygonal mirror wheel. The reflected beam passes through a second cylindrical lens which reconfigures the beam to an approximately circular cross-section and the beam is then focussed by a convergent lens as a spot onto an image scan plane. The laser beam is passed through a beam expander to control the dimensions of the beam and to produce a beam of more optimum diameter. As shown in the Fleischer specification the beam is increased in diameter by a factor of 5 and the expanded beam focussed to a circular scan spot.

U.S. specification No. 3,980,397 (Judd) is concerned with the intensity variations that occur in a beam of laser light which has been limited in diameter by passage through a circular aperture. After the beam has passed through the circular aperture a peak intensity arises at the centre of the beam and the intensity surrounding the centre decreases. Judd states that these intensity variations are undesirable and discloses a structure for the aperture which reduces or eliminates them. According to Judd the aperture has to be substantially circular and have the radius of its periphery vary randomly to provide irregular perturbations around the periphery.

An article entitled "Irradiance uniformity and power loss with a spatially filtered laser beam" by B. J. Pernick, at pages 1344/5/6 in Review of scientific instruments, Vol. 45 No. 11, November 1974, describes a spacial filtered beam expansion and collimation system. Light from a laser is focussed onto a pin hole in a diaphragm and the transmitted cone of light is collimated by a large collimation lens. The collimated beam is directed through an aperture in a baffle. The aperture is of smaller cross-section than the collimated beam and the diaphragm acts to stop light contained in the marginal ring of the beam. Pernick therefore produces a beam of generally uniform intensity by stopping down the beam. However, the Pernick system involves a substantial loss of light due to the use of the pin hole. The output beam is therefore of low intensity compared with the original laser beam.

The present invention has as its main object to provide an improved focussed laser beam system. In particular it is an object to provide such a system providing a reasonable sized, focussed light spot which has an acceptable range or depth of focus. It is a specific object to maintain the variation in laser spot size at or near the desired target within tolerable limits over the entire scan filed.

Accordingly the invention provides an optical system comprising a laser light source for generating a beam of coherent light, said beam being of a predetermined circular cross-sectional shape and having a Gaussian intensity distribution over its cross-sectional area, an optical beam expanding lens systems for expanding the cross-sectional area of beam, an aperture diaphragm having a circular aperture positioned so that the expanded beam is incident symmetrically on the aperture and focussing means for focussing the light beam after it has passed through the aperture, said system being characterised in that the circular aperture in the diaphragm is of the same diameter as the unexpanded light beam.

The Applicants have discovered that by the use of a system as set out above, the depth of focus is substantially enhanced.

In order that full advantage of the invention be obtained in practice, the best mode embodiment thereof, given by way of example only, is described in detail hereinafter with reference to the accompanying drawing, in which:

Fig. 1 is a schematic diagram of a prior art focussed laser beam optical system;

Fig. 2 is a schematic diagram of a focussed laser beam optical system according to the invention; and

Figs. 3 and 4 are graphical representations of the operation of an optical system according to the invention.

Description

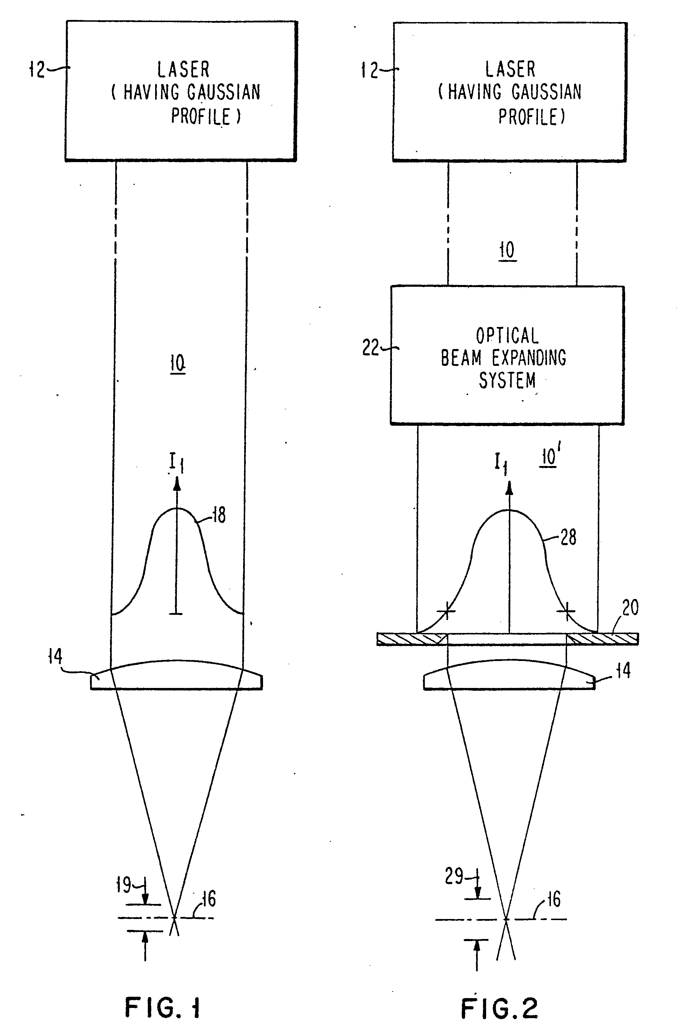

A conventional focussed laser beam optical system is shown in Fig. 1. A laser beam 10, emanating from a laser 12, is arranged to pass a focussing lens system schematically represented here as a single lens 14 for bringing the beam to a focus at a desired target in a given plane represented here by a line 16. The laser beam 10 has a gaussian profile diametrically as represented here by a curve 18

superimposed on the diagram. A range of focus of the system as described is represented by the dimension 19.

The range of focus of the system as shown and described, is increased by interposing an optical stop between the laser 12 and the focussing lens system 14. The stop has an aperture related to the diameter of the beam 10 and the profile represented by the curve 18. The relationship will be discussed in greater detail hereinafter. While the basic arrangement is so readily described, it will be more readily understood with reference to Fig. 2. Here an optical stop 20 is shown in place not only with respect to the focussing lens system 14, but also with respect to an optical beam expanding system 22 which is interposed between the laser 12 and the optical stop 20. Laser sources are usually available in only a few standard beam diameters which are frequently not optimum for the application at hand. The use of an optical beam expanding system as disclosed herein is therefore helpful for most applications. The expanded laser beam 10' has a gaussian profile characteristic represented by a curve 28 and the optical stop 20 is chosen in accordance with this characteristic curve 28 as will be discussed hereinafter.

A suitable beam expander is that commercially obtainable from Spectra-Physics identified as their Model 338 Beam Expanding Telescope although any suitable expander can be used.

As mentioned hereinbefore, it was found empirically that, truncating a laser beam resulted in a desirable increase in the focal range. Investigation with the aid of a computer verified the result, and a computer program was developed for optimizing the arrangement according to the invention.

An article entitled "Measurement and Analysis of the Distribution of Energy in Optical Images" published in the Journal of the Optical Society of America, Vol. 48, No. 7, pages 487—490, July 1958, discusses so-called "line spread functions". A line spread function may be defined as the two dimensional energy distribution in the focussed spot integrated in one direction. It is therefore the curve of the transmitted energy against distance which is obtained when the focussed spot is scanned over i.e. across a narrow slit situated normally to the direction of motion of the spot. Data was obtained on the line spread function width as a function of the degree of defocussing by means of a computer. These data were used to plot the curves of line spread function width at the 1/2 intensity and the $1/e^2$ intensity levels. For each degree of truncation, the calculation was made for an adjusted beam aperture size that produces the same in-focus line spread function 1/2 peak width, as would be obtained with the in-focus untruncated beam.

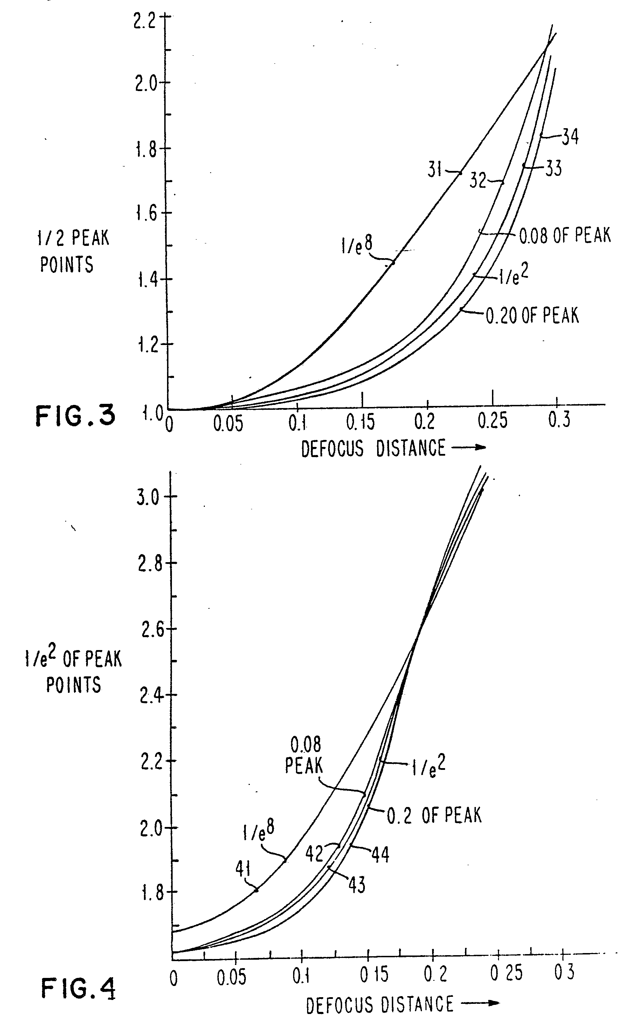

Fig. 3 is a graphical representation of a line spread function width at 1/2 peak points as a function of the distance from an ideal focus point for a range of defocussing. That is to say, Fig. 3 is a plot of the width of the line spread function at a point where the intensity is one half that of the peak intensity, and is plotted against the degree of defocussing. It is to be noted that the width of the line spread function grows as the lens is defocussed. Note also, that for moderate amounts of defocussing (up to the point where the line spread function has grown to about 1.8 times the spread for the in-focus condition), that the spread functions associated with the truncated beams do not grow in width nearly as rapidly as the untruncated beams (represented by the $1/e^8$ curve).

Curves 31, 32, 33 and 34 respectively represent the truncation of the beam at the radius where the beam intensity is $1/e^8$, 0.08, $1/e^2$, and 0.2 of the peak intensity. The curve 31 for truncation at $1/e^8$ is essentially identical to that for the untruncated beam. The abscissa of this plot is also the number of wavelengths of defocussing of the untruncated beam, measured at the $1/e^2$ intensity points in the exit pupil of the focussing lens.

Fig. 4 is a graphical representation of the line spread function widths measured at the $1/e^2$ (or 13.5% of peak) intensity points, as a function of distance from ideal focus. Thus, Fig. 4 is the same as Fig. 3, except that the width of the line spread function at the point where the intensity is $1/e^2$ (13.5%) that of the peak is plotted against the degree of defocussing. Curves 41, 42, 43 and 44 correspond to the levels as listed above.

As can be seen from Figs. 3 and 4, a considerable improvement in focal range is obtained by truncating the beam if the allowable spot size tolerance in the scanner or optical system is between zero and thirty or forty per cent of the spot size. The Applicants appreciated that there was a slower growth rate of the width of the line spread function when a beam having a Gaussian intensity distribution is expanded and thereafter truncated before the focussing lens than with a beam which has not been expanded and truncated. This slower growth rate leads to the considerable and unexpected improvement in the focal range. In one printer where the spot size tolerance is 10 per cent of the spot size, the focal range is increased by about 50 per cent by truncating the beam at the radius where the intensity is 0.2 of that of the peak intensity. With a system in which the alignment and focussing of the system is difficult because of the limited focal range, this increase in focal range results in considerably reduced time required to align and focus the system.

While decreasing the optical stop diameter in the conventional camera lens also will act to increase the focal range, the arrangement according to the invention will do so without substantially changing the spot sizes whereas the spot will bloom in the former arrangement.

## Claims

1. An optical system comprising a laser light source (12) for generating a beam (10) of coherent light, said beam (10) being of a predetermined circular cross-sectional shape and having a Gaussian intensity distribution over its cross-sectional area, an optical beam expanding lens system for expanding the cross-sectional area of the beam, an aperture diaphragm (20) having a circular aperture positioned so that the expanded beam (10') is incident symmetrically on the aperture and focussing means (14) for focussing the light beam after it has passed through the aperture, said system being characterised in that the circular aperture in the diaphragm (20) is of the same diameter as the unexpanded light beam (10).

2. An optical system as claimed in claim 1, further characterised in that the diaphragm cuts off light in the expanded beam having an intensity less than 8 per cent of the peak intensity.

3. An optical system as claimed in claim 1, further characterised in that the diaphragm cuts off light in the expanded beam having an intensity less than 20 per cent of the peak intensity.

## Patentansprüche

1. Optisches System mit einer Laserlichtquelle (12) zur Erzeugung eines Strahlenbündels (10) kohärenten Lichts, das eine vorbestimmte kreisförmige Querschnittsgestalt und eine Gauss'sche Intensitätsverteilung im Querschnitt aufweist, mit einem optischen Strahlaufweitungs-Linsensystem zur Aufweitung der Querschnittsfläche des Strahlenbündels, mit einer Blende (20), die eine kreisrunde Öffnung aufweist und so angeordnet ist, daß das aufgeweitete Strahlenbündel (10') symmetrisch auf die Öffnung auffällt und mit Fokussiereinrichtungen (14) zur Fokussierung des Lichtstrahlenbündels, nachdem es die Öffnung durchlaufen hat, dadurch gekennzeichnet, daß die kreisförmige Öffnung der Blende (20) den gleichen Durchmesser wie das nichtaufgeweitete Lichtstrahlenbündel (10) aufweist.

2. Optisches System nach Anspruch 1, dadurch gekennzeichnet, daß die Blende Licht im aufgeweiteten Lichtstrahlenbündel abschneidet, dessen Intensität kleiner ist als 8% der Spitzenintensität.

3. Optisches System nach Anspruch 1, dadurch gekennzeichnet, daß die Blende Licht im aufgeweiteten Strahlenbündel abschneidet, dessen Intensität kleiner ist als 20% der Spitzenintensität.

## Revendications

1. Système optique comportant une source laser (12) permettant d'engendrer un faisceau (10) de lumière cohérente, ledit faisceau (10) présentant une section circulaire prédéterminée et une distribution d'intensité gaussienne sur cette suction, un système optique permettant d'augmenter la section du faisceau, un diaphragme (20) comportant une ouverture circulaire disposée de telle sorte que le faisceau élargi (10') le frappe de façon symétrique par rapport à l'ouverture, et des moyens de focalisation (14) permettant de focaliser le faisceau lumineux sortant de l'ouverture, ledit système étant caractérisé en ce que le diamètre de l'ouverture circulaire que comporte le diaphragme (20) est identique à celui du faisceau lumineux non élargi (10).

2. Système optique selon la revendication 1, caractérisé en outre en ce que le diaphragme intercepte la lumière dont l'intensité dans le faisceau élargi est inférieure à 8% de l'intensité maximum.

3. Système optique selon la revendication 1, caractérisé en outre en ce que le diaphragme intercepte la lumière dont l'intensité dans le faisceau élargi est inférieure à 20% de l'intensité maximum.

FIG.1

FIG.2

FIG.3

1/2 PEAK POINTS

DEFOCUS DISTANCE →

FIG.4

1/e² OF PEAK POINTS

DEFOCUS DISTANCE →